# EUROPEAN PATENT APPLICATION

(11) **EP 1 947 409 A1**
(43) Date of publication of application: **23.07.2008**
(21) Application number: 08250266.7
(22) Date of filing: 22.01.2008
(51) Int. Cl.: F26B 21/00

(54) **Driers**

(30) Priority: 22.01.2007 GB 0701142
(71) Applicant: Richardson, Gary, 3 The Shruberry. Thorney Road Emsworth Hampshire, PO10 8DB (GB)
(72) Inventor: Richardson, Gary, 3 The Shruberry. Thorney Road Emsworth Hampshire, PO10 8DB (GB)
(74) Representative: Knott, Stephen Gilbert

(57) **Abstract**

A drier for drying water-based paints includes a blower (8) that is attached to an extendable telescopic hose (7). The hose (7) possesses 'stay-put' characteristics. This in turn is attached to a magnetic base unit (3), with the magnet being rubber coated to prevent damage when placed on the body of a car. The complete unit is fed compressed air from a compressor (15) through an airline (4) that is attached to the side of the drier.

## Description

The invention relates to driers for drying water based coatings such as paint.

As a result of EU directives on solvent emissions, from 1^{st} January 2008 it will be unlawful for car body repairers within the EU to use non compliant solvent based coatings. Instead they must use water based coatings.

The biggest problem attached to the use of water based coatings such as paint is the drying process. Unlike fast drying solvent paint, water based paints must be force dried by directing air from blowers to the freshly painted surface. There are various known techniques employed to achieve this. The bigger car body repairers have large blowers installed in each corner of a spray booth. This is costly and many of the smaller car body repairers have adopted a method using air drying guns running from a compressor and operated handheld, which is a time consuming process, or attached to an adjustable tripod stand that is moved around the car. This latter mode of operation takes up a lot of space in an already confined area and requires constant adjustment.

According to the invention, there is provided a drier for drying water-based coatings comprising a base incorporating a magnet by which the base can be held on a surface, a flexible and adjustable shape-holding member carried by the base and a blower supported by the member and positionable by adjustment of the member.

This enables a operative to direct the airflow over the freshly painted surface by moving the magnetic base and or adjusting the hose with minimal effort, so allowing the operative to attend to other duties whilst the paint is drying.

In addition to the above, driers according to the invention are extremely inexpensive compared to the installation of blowers in a spray booth and the cost of a stand. Furthermore, most repairs carried out on cars are to a small area and this leaves adjacent areas on the car as suitable surfaces to place the magnetic base. The magnet may be rubber coated to reduce the possibility of damage to the paintwork.

Alternatively, driers according to the invention can also be attached to a wall of a spray booth, if the repair is to the side of the car. For larger areas it is possible to have two driers according to the invention operating simultaneously by using split connectors on the airline hose. Driers according to the invention may weigh under 2kg, enabling an operative to use the drier handheld. If preferred, a handheld gun type blower can be attached to the end of the hose with a bracket to hold it in place. When finished with, driers in accordance with the invention can be attached magnetically to an area out of the way on the spray booth wall.

The following is a more detailed description of some embodiments of the invention, by way of example, reference being made to the accompanying drawings, in which:-
Figure 1 is a schematic view of a drier for drying water-based paints and including an adjustable shape-holding member in a retracted position,
Figure 2 is a similar view to Figure 1, but showing the member in an extended position,
Figure 3 shows a modification of the drier of Figures 1 and 2 in which a blower of the drier is detachable.
Figure 4 shows a modification of the drier of Figures 1 and 2 in which two blowers are provided using a split or "Y" connector.
Figure 5 shows a second form of drier for drying water-based paints in which a base, a housing and a hard tube are formed in one-piece and in which the number is formed partially by interlocking segments, and
Figure 6 is a partial view of the drier of Figure 5 including an anchor plate.

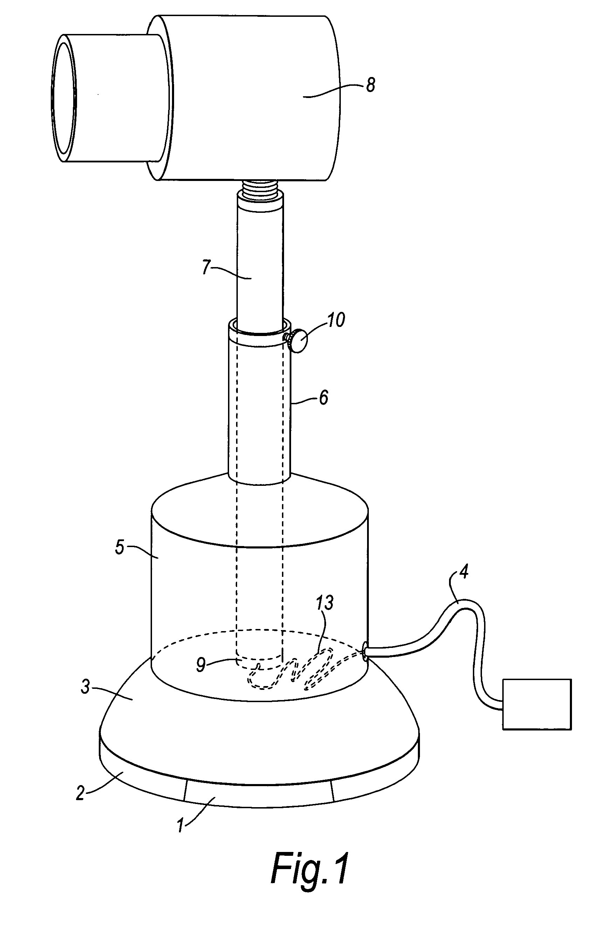

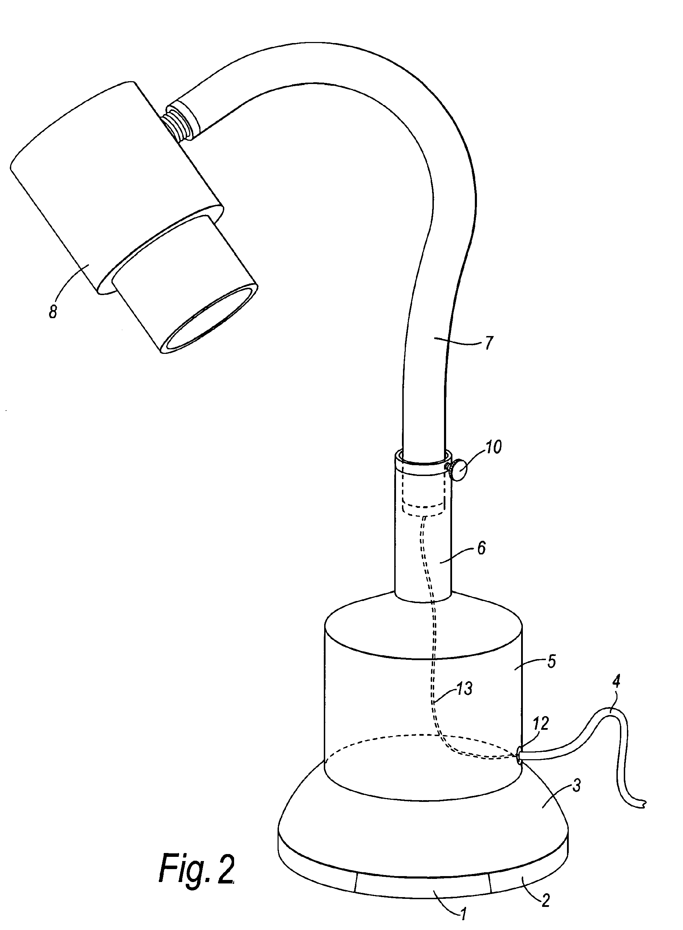

Referring first to Figures 1 and 2, the drier has a magnet 1 attached to a base 3 formed from a plastics material. The base 2 has a padded rubber outer edge 2. The base 3 may, for example, have a diameter of 180mm.

The base 3 carries an airline housing 5, which may be bolted to the base 3. As seen in Figures 1 and 2, the housing 5 has a cylindrical body resting on the base 3 and a frustro-conical upper end. A hard plastics outer tube 6 extends from the centre of the upper end.

A standard air hose connector 12 is mounted on the body and, externally of the housing 5, is connected to a first airline 4 connected to an air compressor 15 of conventional type. Within the housing 5, the connector 12 is connected to a second airline 13 that connects, in turn, to an inner end of an extendable hose 7 that passes through and is guided by the outer tube 6.

The extendable hose 7 is formed from a material that is flexible with adjustable shape-holding properties. Thus, the hose 7 can be flexed and, when flexed, will retain the flexed position until moved to a new position. A suitable material for such a hose 7 is sold under the trade mark DECABON.

The hose 7 can be moved into and out of the outer tube 6, and held relative to the tube 6 in any desired position by a thumbscrew 10 on the outer tube 6.

The hose 7 carries, at an end remote from the base 3, a blower 8 and air delivered to the hose 7 is passed to the blower 8 through standard connectors. The blower 8 is made from a plastics material. It is so designed that the expression of compressed air from the blower 8 draws air from the atmosphere that mixes with the compressed air.

In use, the drier is used to dry water-based paints applied to a surface such as a body of a motor vehicle. The blower 8 is positioned to direct air and the surface by positioning the base 3, adjusting the hose 7 through the outer tube 6 and by flexing the hose 7 (see Figure 2). The base 3 can, by use of the magnet 1, be mounted on a part of the vehicle body adjacent to the surface with the padded rubber outer edge 2 protecting the vehicle body. Alternatively, the magnet 1 can be used to mount the drier on a wall of a spray booth in which the vehicle is located. The drier is also light enough to be gripped around the tube 6 and used as a handheld drier. It may weigh less than 2.5kg.

The housing 5 can be detached from the base 3 to provide access to the components within the housing 5.

Of course, more than one such drier can be used at the same time to dry larger surface areas.

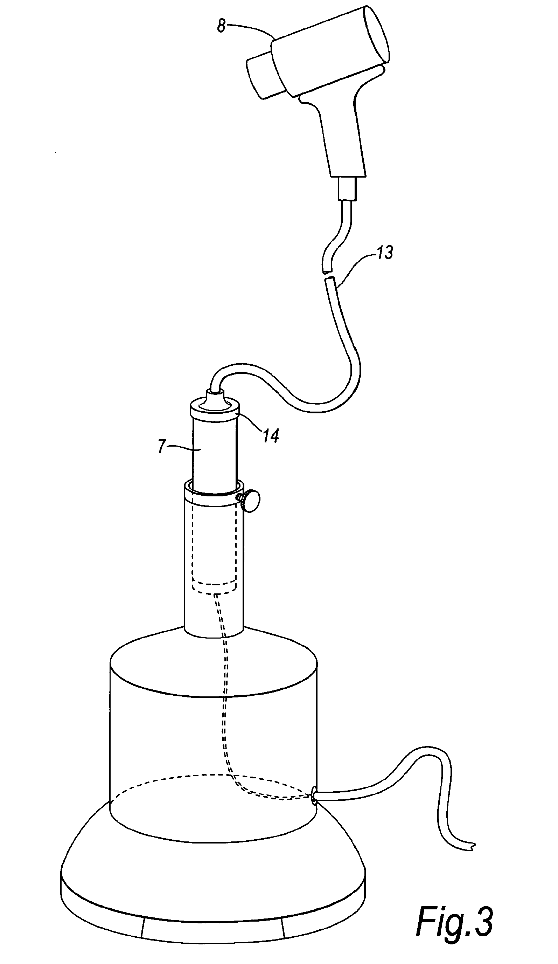

Referring next to Figure 3, the blower 8 may be detachable from the hose 7 so that just the blower 8 is moved over the surface. This is achieved by providing a third airline 13 extending between the hose 7 and the blower 8, and a clip 14 on the hose 7 for demountably connecting the blower 8 to the hose 7.

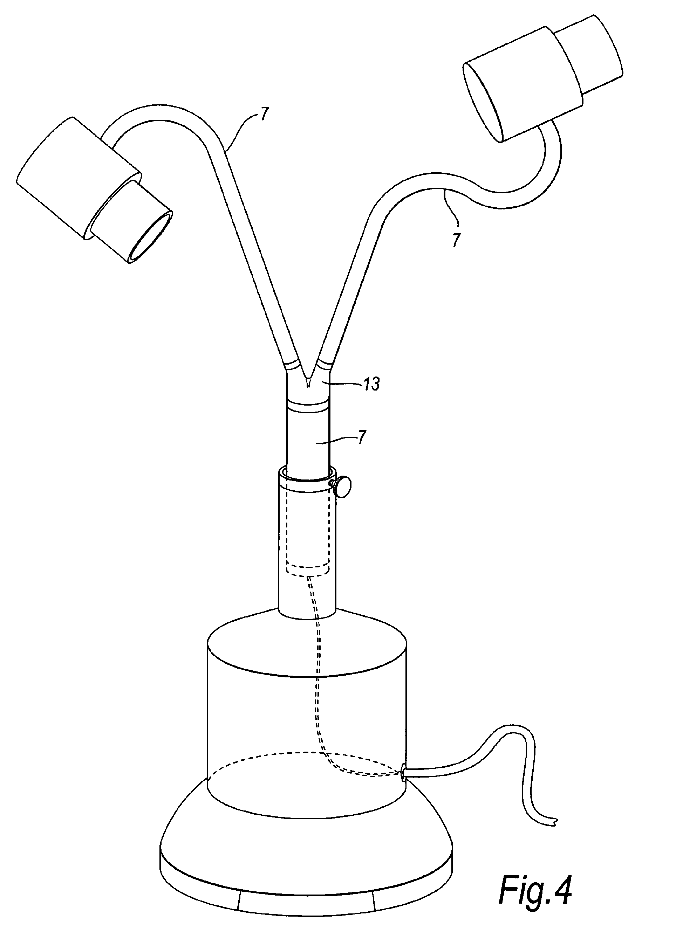

Referring next to Figure 4, it is possible to mount more than one blower 8 on the hose 7. As seen in Figure 4, in this case a split connector is provided at the end of the hose 7 and two blowers 8 are carried by the hose 7 and receive air from the connector. It will be appreciated that there could be two or more hoses 7 extending from the housing 5 each connected to a respective air supply and each carrying a respective blower 8. This would allow the blowers 8 to be positioned separately.

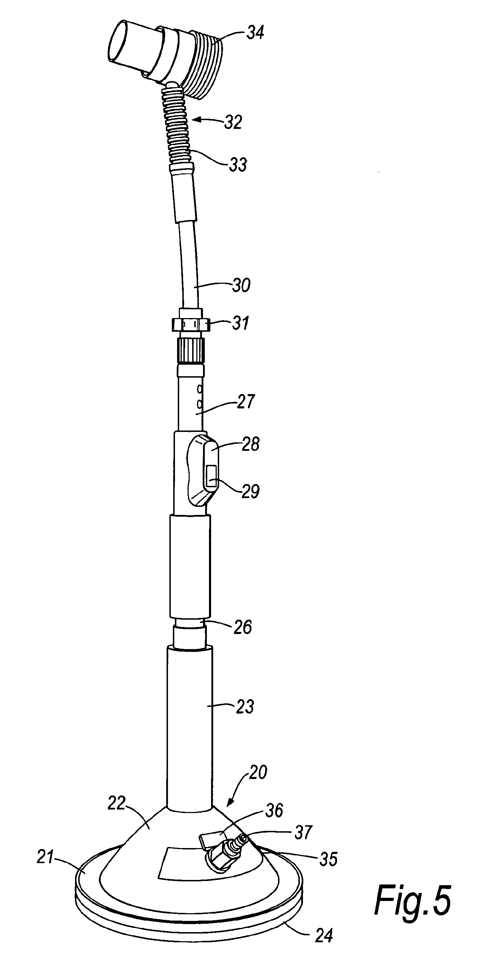

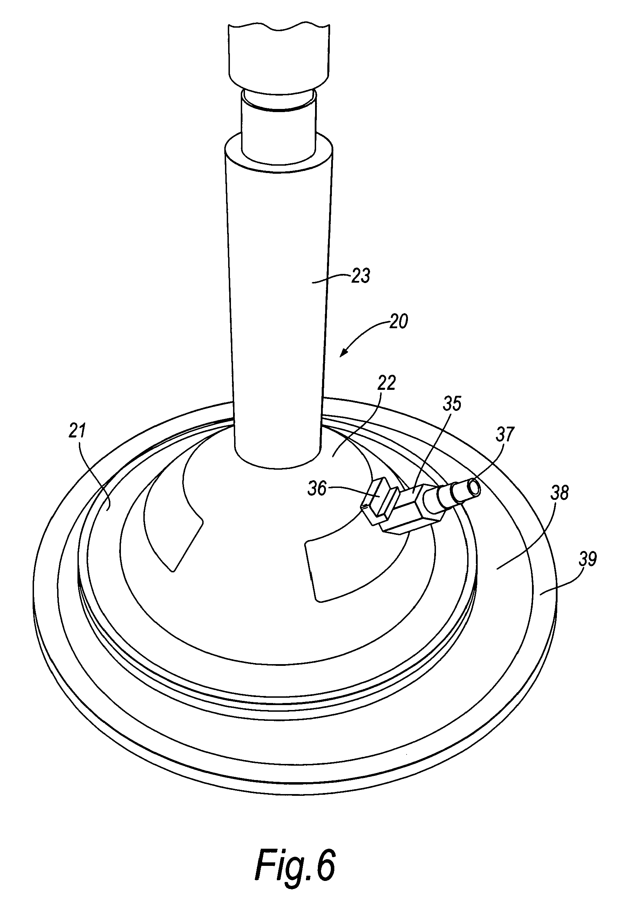

Referring next are the Figures 5 and 6, the second form of drier comprises a one-piece moulded plastics base unit indicated generally at 20 having a flat circular base 21 surmounted by a frusto-conical housing 22 and terminating in an upwardly extending tube 23. The base 21 carries a foam pad 24 surrounding a magnet (not shown) fixed to the underside of the base 21 and surrounded by the foam pad 24.

The tube 23 is fixed to a further tube 26 also made of plastics material and coaxial with and extending from the tube 23. A metal tube 27 is telescopically received in the further tube 26 for sliding movement into and out of the further tube 26. The end of the further tube carries a locking device 28 including a peg (not shown) for engaging in any one of a series of axially spaced holes in the metal tube 27 to lock the metal tube 27 to the further tube 26. The pin is released by a push button 29 provided on the locking device 28.

The metal tube receives telescopically an extendable hose 30 that is formed from a material that is flexible with adjustable shape holding properties. Thus, the hose 30 can be flexed and, when flexed, will retain the flexed position until moved to a new position. A suitable material for such a hose is sold under the trade mark DECABON. The metal tube carries at its free end, a screw nut device 31 that, when tightened, locks the extendable hose 30 to the metal tube 27 and that, when released, allows the extendable hose 30 to be slid in and out of the metal tube 27.

The free end of the extendable hose carries a second hose 32 formed from interlocking relatively moveable elements 33. These elements may be of the kind sold under the trade mark LOC-LINE. This second hose 32 can thus also be flexed and, when flexed, will retain the flexed position until moved to a new position.

The end of the second hose carries a blower 34 of the kind described above with reference to Figures 1 to 4.

The base unit 20 includes a connector 35 incorporating an on/off valve 36. The connector includes an inlet port 37 for connection to an air compressor of known kind. Within the base unit, the connector 35 includes an outlet port (not shown) connected to an air hose that leads to the lower end of the extendable hose 30 to allow air to pass through the extendable hose 30 and the second hose 32 to the blower 34.

The device also includes a circular metal pad 38 with a rubber rim 39. The base unit 20 can be stood on the metal pad and held there by attraction between the magnet and the metal pad 38 to provide stability.

The drier described above with reference to Figures 5 and 6 operates in the same manner as the drier described above with reference to Figures 1 to 4. The position of the blower 34 can be adjusted by flexing the extendable hose 30 and/or the second hose 32. The height of the blower 34 can be adjusted using the locking device 28 and the screw nut device 31. In this way, the blower 34 can be positioned in any required position to drier painted surface. A foam sleeve 40 around the further tube provides a hand grip to allow the drier to be used handheld.

Of course, the drier of Figures 5 and 6 could have two or more blowers 34. Additionally or alternatively, the or each blower 34 may be demountable from the remainder of the drier for handheld use.

## Claims

1. A drier for drying water-based coatings comprising a base (3; 21) incorporating a magnet (1) by which the base (3; 21) can be held on a surface, a flexible and adjustable shape-holding member (7; 30, 31) carried by the base (3; 21) and a blower (8; 34) supported by the member (7; 30, 31) and positionable by adjustment of the member (7; 30, 31).

2. A drier according to claim 1 wherein the member (7; 30, 31) provides a passage for compressed air to the blower, the blower (8; 34) venting the compressed air.

3. A drier according to claim 2 wherein the base includes a connector (4, 12, 13; 35) for connecting the passage to a compressor.

4. A drier according to claim 2 or claim 3 wherein the blower (8; 34), in use, draws in atmospheric air as the compressed air is vented.

5. A drier according to any one of claims 1 to 4 wherein the base includes a hard tube (6; 27), the member (7; 30, 31) being received in the hard tube (6; 27) and being adjustably extendable from the hard tube (6).

6. A drier according to claim 5 wherein the member (7; 30, 31) is lockable to and unlockable from the hard tube (6; 27) to allow adjustment of the position of the member (7) relative to the hard tube (6; 27).

7. A drier according to any one of claims 1 to 6 wherein two blowers (8; 34) are provided.

8. A drier according to claim 7 and in which the member (7; 30, 31) provides a passage for compressed air to the blower, the passage being split to supply compressed air to each blower.

9. A drier according to claim 5 or claim 6 wherein the base (3) carries a removable housing (5), the hard tube (6) extending through and from the housing (5).

10. A drier according to claim 5 or claim 6 wherein the base (21) is formed integrally with a housing (22), the housing (22) including a tube (23), the hard tube (27) being adjustably received in the housing tube (23).

11. A drier according to any one of claims 1 to 10 wherein the base (3; 21) includes an underside, the underside having a non-scratch material (2; 24) applied thereto for contacting said surface.

12. A drier according to any one of claims 1 to 11 wherein the or each blower (8; 34) is detachable from the member for use as a hand-held appliance.

13. A drier according to any one of claims 1 to 12 and including a metal pad (38), the base (3, 21) standing on the metal pad (38) and holding to the metal pad (38) by attraction between the magnet (1) and the metal pad (38).

14. A drier according to any one of claims 1 to 13 wherein the member (7; 30) is formed at least partially by a continuous tube of flexible and adjustable shape holding material.

15. A drier according to any one of claims 1 to 14 wherein the member (31) is formed at least partially by a series of interlinked flexible and adjustable shape holding elements.

16. A drier according to any one of claims 1 to 15 in combination with a compressor.
